# EUROPÄISCHE PATENTSCHRIFT

(11) **EP 0 965 061 B1**
(45) Veröffentlichungstag und Bekanntmachung des Hinweises auf die Patenterteilung: **21.11.2001**
(21) Anmeldenummer: 98916823.2
(22) Anmeldetag: 02.03.1998
(51) Int. Cl.: G02B 6/38, H01R 13/514

(54) **HALTER FÜR GEHÄUSE EINES OPTISCHEN STECKERS**
HOLDER FOR HOUSING OF AN OPTICAL CONNECTOR
SUPPORT POUR BOITE D'UN EMBOUT OPTIQUE

(30) Priorität: 07.03.1997 DE 19711099
(43) Veröffentlichungstag der Anmeldung: 22.12.1999
(73) Patentinhaber: Infineon Technologies AG, 81669 München (DE)
(72) Erfinder: WEIGEL, Hans-Dieter, D-14548 Caputh (DE)
(74) Vertreter: Zedlitz, Peter, Dipl.-Inf.
(86) Internationale Anmeldenummer: DE9800609
(87) Internationale Veröffentlichungsnummer: WO9840773

(56) Entgegenhaltungen:
- EP-A- 0 408 852
- DE-C- 4 302 826
- US-A- 5 553 180

## Beschreibung

Die Erfindung liegt auf dem Gebiet der optischen Verbindungstechnik mittels einzelner Lichtwellenleitersteckverbinder, insbesondere SC-Stecker, mit denen Lichtwellenleiter zur optischen Ankopplung an entsprechende Kopplungspartner endseitig versehen sind und die z. B. paarweise einen Duplex-Steckverbinder bilden. Die Erfindung betrifft eine Haltevorrichtung mit einem Halter mit mindestens zwei Aufnahmen für je ein Gehäuse eines optischen Steckverbinders, wobei zumindest eines der Steckverbinder-Gehäuse mit zu seiner Längsachse radialem Spiel in seiner Aufnahme gelagert ist.

Aus dem deutschen Gebrauchsmuster G 91 02 805.1 ist ein zweiteiliger Halter mit zwei Aufnahmekammern bekannt, deren Innenprofil exakt auf das Außenprofil eines jeweils aufzunehmenden Steckverbinder-Gehäuses abgestimmt ist. Die Steckverbinder-Gehäuse sind spielfrei gehalten.

Die EP-A2 0 408 852 offenbart eine Haltevorrichtung mit einem Halter mit zwei Aufnahmen für je ein einzelnes optisches Steckverbinder-Gehäuse, wobei in jeder Aufnahme ein Steckverbinder-Gehäuse fixiert ist. Um eine radiale Relativbewegung der Steckverbinder zueinander zu ermöglichen, sind die Aufnahmen ihrerseits über ein nachgiebiges Element miteinander verbunden. Dadurch wird zwar eine von verbreiteten Normen (z. B. ANSI X3T9) geforderte ausreichende Radialbeweglichkeit gewährleistet, jedoch ist ein verhältnismäßig großer Raum zwischen den beiden Aufnahmen für das nachgiebige Element erforderlich. Zur Handhabung muß der bekannte Halter im Bereich des nachgiebigen Elements gegriffen werden, wobei dieses unerwünscht zusammengedrückt und/oder die relative Radialbeweglichkeit der Aufnahmen verhindert wird.

Aus der DE 43 02 826 C1 ist ein Halter bekannt, der bei einfachem konstruktiven Aufbau äußerst anwenderfreundlich handhabbar ist. Dessen Aufnahmen sind innenseitig mit Haltemitteln versehen. Die Innenabmessungen der Aufnahmen und die Haltemittel sind in bezug auf die korrespondierenden Außenabmessungen und Konturen des jeweils aufgenommenen Steckverbinder-Gehäuses derart abgestimmt, daß das in der Aufnahme gehaltene Steckverbinder-Gehäuse - und damit der von dem Gehäuse aufgenommene Steckverbinder - radial zu seiner Längsachse beweglich gelagert ist. Dieser bekannte Halter erlaubt bei relativer Radialbeweglichkeit der Steckverbinder-Gehäuse zueinander dennoch eine einfache Handhabung und ist in der Herstellung vergleichsweise einfach. Außerdem zeichnet sich der Halter durch einen reduzierten Platzbedarf aus.

Im unverbundenen, d. h. nicht eingesteckten Zustand weist eine unter Verwendung eines solchen Halters geschaffene Duplex-Verbinderanordnung jedoch ein ungedämpftes - zum Ausgleich von Toleranzen beim Einsteckvorgang durchaus gewünschtes - Radialspiel der Steckverbinder-Gehäuse bzw. der in ihnen enthaltenen Einzelstecker zueinander auf. Die Einzelstecker nehmen dadurch eine zufällige unbestimmte Position relativ zueinander ein, z. B. eine nicht parallele Ausrichtung. Dadurch kann sich die Kopplung bzw. das Einstecken der von dem Halter aufgenommenen Einzelstecker problematisch gestalten. In der Praxis könnte es außerdem zu Irritationen kommen, weil die spielbehaftete Lagerung zu Klappergeräuschen führen kann, so daß - unberechtigterweise - die Funktion und Zuverlässigkeit der gesamten Steckeranordnung angezweifelt werden könnte.

Aus der US-PS 5,553,180 ist ein Halter der eingangs genannten Art bekannt geworden, der im Hinblick auf diese vorbeschriebene Problematik verbessert ist. Bei diesem Halter wirkt zusätzlich auf die spielgelagerten Steckverbinder-Gehäuse zumindest ein elastisches Element derart ein, daß die Steckverbinder-Gehäuse in eine definierte Ruhelage gebracht sind, aus der sie entgegen der Kraftwirkung des elastischen Elements auslenkbar sind. Damit wird zugleich verhindert, daß die weiterhin spielgelagerten Steckverbinder-Gehäuse im unverbundenen Zustand Geräusche verursachen.

Ein verbleibendes Problem dieses bekannten Halters besteht allerdings darin, daß bei unvorteilhafter Handhabung z. B. durch Fassen der Halteranordnung im rückwärtigen Bereich der Steckverbinder-Gehäuse eine vergleichsweise starke frontseitige Abspreizung der Steckverbinder voneinander eintritt. Dies kann zu Schwierigkeiten bei der weiteren Handhabung und zu einem vermehrten Steckkraftbedarf führen.

Die Aufgabe der Erfindung besteht in der Schaffung einer Haltervorrichtung, die bei weiterhin einfachem konstruktiven und platzsparendem Aufbau eine vorbestimmt und klappergeräuschfreie Ruhelage der Steckverbinder-Gehäuse gewährleistet und beim Einsteckvorgang die Überwindung nur geringer Zentrier- oder Ausrichtkräfte erfordert.

Diese Aufgabe wird erfindungsgemäß bei einer Haltevorrichtung der eingangs genannten Art dadurch gelöst, daß für jede Aufnahmekammer in einem Halter zwei in Steckrichtung hintereinanderliegende Haltemittel vorgesehen sind und daß der Einwirkungsbereich des elastischen Elements näher an dem stirnseitigen, in Steckrichtung ersten Haltemittel liegt. Die erfindungsgemäße Gestaltung der Haltervorrichtung ist insbesondere hinsichtlich der mechanischen Belastung der Steckverbinder und der beim Kopplungsvorgang erforderlichen Steckkräfte vorteilhaft.

Die Federkraftwirkung des elastischen Elements kann nach einer bevorzugten Weiterbildung der Erfindung zur weiteren Verbesserung der Steckeigenschaften derart ausgestaltet sein, daß das elastische Element im Zusammenwirken mit aufaahmeseitigen Anschlägen eine längsachsparallele Ausrichtung der Steckverbinder-Gehäuse bewirkt.

Fertigungstechnisch und montagetechnisch besonders bevorzugt sind die Haltemittel und die Anschläge von korrespondierenden Erhebungen und Ausnehmungen gebildet. Besonders bevorzugt ist das elastische Element eine Druckfeder.

Ein Ausführungsbeispiel der Erfindung wird nachfolgend anhand einer Zeichnung weiter erläutert; es zeigen:
Figur 1 in Seitenansicht einer erfindungsgemäßen Haltevorrichtung mit SC-Stecker und
Figur 2 die Haltevorrichtung nur mit Steckverbinder-Gehäusen im Horizontalschnitt.

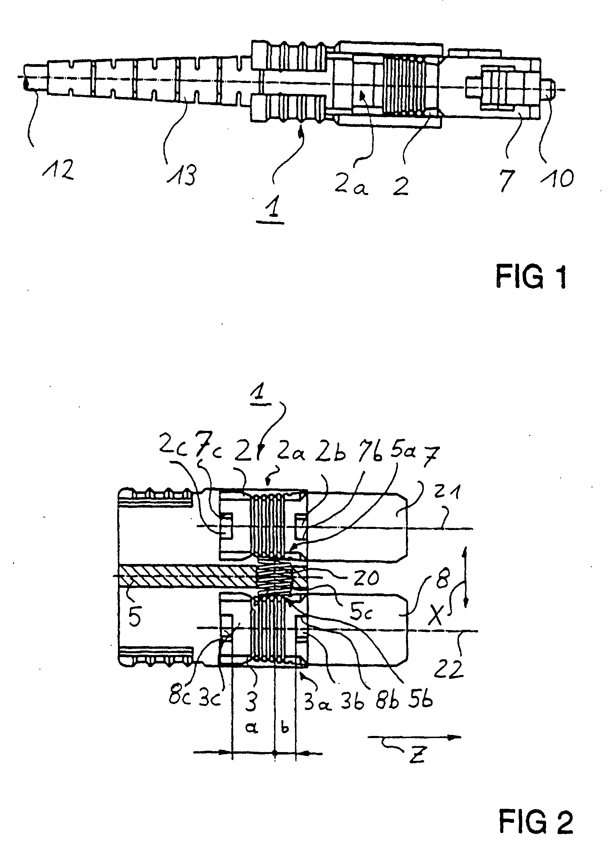

Der in den Figuren 1 und 2 gezeigte Halter 1 entspricht in seinem grundsätzlichen konstruktiven Aufbau z. B. dem in der DE 43 02 826 C1 offenbarten Halter. Der Halter 1 umfaßt zwei Aufnahmen 2, 3 (Figur 2) mit einem im wesentlichen C-förmigen Querschnitt mit jeweils einer offenen Seite 2a, 3a. Die Aufnahmen 2, 3 sind annähernd spiegelsymmetrisch ausgebildet und sind durch einen gemeinsamen Mittelsteg 5 getrennt. In jeder Aufnahme 2, 3 ist je ein einzelnes optisches Steckverbinder-Gehäuse 7, 8 einbringbar. Nur in Figur 1 ist ein in an sich bekannter Weise in dem Steckverbinder-Gehäuse 7 gehaltener Steckerstift 10 mit einem in einer zentralen Steckerstiftbohrung aufgenommenen Lichtwellenleiterende gezeigt. In Figur 1 ist außerdem eine das abgehende Lichtwellenleiterkabel 12 umgebende Knickschutztülle 13 dargestellt. Diese Einzelheiten sind aus Gründen der besseren und übersichtlichen Darstellung in Figur 2 fortgelassen.

Wie in der DE 43 02 826 C1, auf die ausdrücklich bezug genommen wird, detailliert erläutert, greifen aufnahmeinnenseitige Erhebungen 2b, 2c; 3b, 3c in korrespondierende, an den oberen und (nicht gezeigten) unteren Außenflächen 7a, 8a der Gehäuse 7, 8 ausgebildete Ausnehmungen 7b, 7c; 8b, 8c ein. Die Innendimensionen der Aufnahmen 2, 3 sind zumindest in der radialen Richtung X größer bemessen als die entsprechenden Außenabmessungen der Gehäuse 7, 8. Die Erhebungen 2b, 2c; 3b, 3c sind zumindest in Richtung X derart kleiner in bezug auf die entsprechenden Abmessungen der korrespondierenden Ausnehmungen 7b, 7c; 8b, 8c bemessen, daß die Gehäuse 2, 3 zumindest in Richtung X transversal zur Längsrichtung (Steckrichtung) Z spielbehaftet und beweglich sind. Die Erhebungen 2b, 2c; 3b, 3c haben jeweils eine der offenen Seite 2a bzw. 3a zugewandte Schräge, die beim seitlichen Einführen der Steckverbinder-Gehäuse 7, 8 zunächst mit den Kanten des Gehäuses in Kontakt kommen. Dabei weiten sich die Schenkel der C-förmigen Aufnahmen 2, 3 auseinander, so daß die Gehäuse 7 bzw. 8 seitlich in die Aufnahmen einschiebbar sind. Bei eingeschobenem Gehäuse rasten die Erhebungen in die steckverbindergehäuseseitigen Ausnehmungen ein und halten die Gehäuse unverlierbar in den Aufnahmen. Die Erhebungen weisen der offenen Seite 2a bzw. 3a abgewandte Anschlagflächen auf, die jeweils mit einer Begrenzungsfläche der anliegenden Ausnehmung zusammenwirken und die radiale Beweglichkeit der Gehäuse zur offenen Seite hin begrenzen. Die radiale Bewegung der Gehäuse in entgegengesetzter Orientierung aufeinander zu wird durch den gemeinsamen Mittelsteg 5 begrenzt. Das Spiel zwischen Anschlag bzw. Begrenzungsfläche ist im vorliegenden Beispiel zu jeweils 0,5 mm gewählt, so daß die Gehäuse insgesamt um 1 mm in radialer Richtung X beweglich sind. Eine zusätzliche Beweglichkeit kann in der zur X- bzw. Z-Richtung orthogonalen Richtung Y dadurch realisiert sein, daß die entsprechenden Steckverbinder-Gehäuseabmessungen und die Höhe der Erhebungen bzw. die Tiefe der Ausnehmungen zur spielbehafteten Lagerung in Y-Richtung bemessen sind.

In die Aufnahmen 2, 3 mit den spielgelagerten Steckverbinder-Gehäusen 7, 8 ragt ein elastisches Element 20, das im Ausführungsbeispiel als Schrauben-Druckfeder ausgebildet ist. Die Druckfeder 20 ist in einer Durchgangsbohrung 5c des Mittelstegs 5 angeordnet und beispielsweise durch entsprechende Passung festgelegt und gegen ein Herausrutschen gesichert. Die Druckfeder 20 übt auf beide Gehäuse 7, 8 eine jeweils in Richtung auf die offenen Seiten 2a bzw. 3a wirkende Druckkraft aus, so daß die korrespondierenden Anschlagflächen der Erhebungen bzw. Ausnehmungen in Anschlag gelangen. Durch die Anordnung und die plane Ausgestaltung der Anschlagflächen werden die Gehäuse 7, 8 und damit die in ihnen gehaltenen Steckerstifte 10 (Figur 1) mit ihren Längsachsen 21, 22 achsparallel in Richtung der Steckachse Z vorausgerichtet.

Die in Steckrichtung Z hintenliegenden Haltemittel 2c, 7c; 3c, 8c (Erhebungen bzw. Ausnehmungen) sind von den Angriffsbereichen 5a, 5b der Druckfeder 20 auf die Gehäuse 7, 8 im Abstand a entfernt und damit derart angeordnet, daß die Angriffsbereiche 5a, 5b näher an dem im Abstand b entfernten stirnseitigen, in Steckrichtung Z ersten Haltemittel 2b, 7b bzw. 3b, 8b liegen. Dadurch werden die beim Einstecken des mit einzelnen SC-Steckern bestückten Halters notwendigen Zentrierkräfte bei etwaigem Toleranzausgleich verringert und die zu überwindenden Vorspannkräfte auf ein unmerkliches Maß reduziert.

Durch die Vorspannung der Steckverbinder-Gehäuse 7, 8 in die in der Figur 2 gezeigte Ruhelage ist in vorteilhafter Weise eine achsparallele Vorausrichtung der Steckerstifte sichergestellt, was zu einer wesentlich vereinfachten Handhabung führt. Außerdem können die Gehäuse 7, 8 in ungestecktem Zustand keine freien Bewegungen mehr ausführen, so daß Klappergeräusche vermieden werden. Dennoch ist der erfindungsgemäße Halter robust und konstruktiv außerordentlich einfach aufgebaut. Der Halter erfordert gemäß dem in Figur 2 gezeigten Ausführungsbeispiel in besonders vorteilhafter Ausgestaltung nur ein einziges zusätzliches Element, nämlich die Schrauben-Druckfeder 20. Als elastische Elemente kommen aber z. B. auch Kunststoffkörper, Gummibuchsen oder Gummistopfen in Betracht.

## Patentansprüche

1. Haltervorrichtung mit einem Haltes (1)
mit zwei Aufnahmekammern (2, 3) zur Aufnahme je eines Steckverbinder-Gehäuses (7, 8) und mit aufnahmekammerseitigen Haltemitteln (2b, 2c; 3b, 3c), die mit korrespondierenden Haltemitteln (7b, 7c; 8b, 8c) der Steckverbinder-Gehäuse (7, 8) zur in radialer Richtung (Z) spielbehafteten Lagerung der Gehäuse (7, 8) zusammenwirken, wobei auf die spielgelagerten Steckverbinder-Gehäuse (7, 8) zumindest ein elastisches Element (20) derart einwirkt, daß die Steckverbinder-Gehäuse (7, 8) in eine definierte Ruhelage gebracht sind, aus der sie entgegen der Kraftwirkung des elastischen Elements (20) auslenkbar sind,
**dadurch gekennzeichnet, daß**
für jede Aufnahmekammer (2, 3) zwei in Steckrichtung (Z) hintereinanderliegende Haltemittel (2b, 2c; 3b, 3c) vorgesehen sind und daß der Einwirkungsbereich des elastischen Elements (20) näher an dem stirnseitigen, in Steckrichtung (Z) ersten Haltemittel (2b, 3b) liegt.

2. Haltervorrichtung nach Anspruch 1,
**dadurch gekennzeichnet, daß**
das elastische Element (20) im Zusammenwirken mit aufnahmeseitigen Anschlägen eine längsachsparallele Ausrichtung der Steckverbinder-Gehäuse (7, 8) bewirkt.

3. Haltervorrichtung nach einem der vorangehenden Ansprüche,
**dadurch gekennzeichnet, daß**
das elastische Element eine Druckfeder (20) ist.

## Claims

1. Holder device with a holder (1) having two receiving chambers (2, 3) for each receiving a connector housing (7, 8) and having holding means (2b, 2c; 3b, 3c) which are provided on the receiving chambers and interact with corresponding holding means (7b, 7c; 8b, 8c) of the connector housings (7, 8) for mounting the housings (7, 8) with play in the radial direction (Z), with at least one flexible element (20) acting on the connector housings (7, 8) which are mounted with play in such a way that the connector housings (7, 8) are brought into a defined position of rest, from which they can be deflected counter to the action of the force of the flexible element (20), **characterized in that** two holding means (2b, 2c; 3b, 3c), lying one behind the other in the direction of insertion (Z), are provided for each receiving chamber (2, 3) and **in that** the effective region of the flexible element (20) lies closer to the holding means (2b, 3b) at the front end, the first holding means in the direction of insertion (Z).

2. Holder device according to Claim 1, **characterized in that** the flexible element (20) interacting with stops on the receptacles brings about an alignment of the connector housings (7, 8) parallel to the longitudinal axis.

3. Holder device according to one of the preceding claims, **characterized in that** the flexible element is a compression spring (20).

## Revendications

1. Dispositif de maintien comportant un support (1) pourvu de deux chambres (2, 3) réceptrices, destinées à recevoir chacune un boîtier (7, 8) de connecteur enfichable et doté de moyens (2b, 2c ; 3b, 3c) de maintien qui se trouvent du côté des chambres réceptrices qui coopèrent avec des moyens (7b, 7c ; 8b, 8c) de maintien correspondants des boîtiers (7, 8) de connecteurs pour le montage des boîtiers (7, 8) avec jeu en direction (X) radiale, au moins un élément (20) élastique agissant, sur les boîtiers (7, 8) de connecteurs montés avec jeu, de telle sorte que les boîtiers (7, 8) sont amenés dans une position définie de repos, dont ils peuvent être sortis à l'encontre de la force de l'élément (20) élastique,
**caractérisé en ce qu'**il est prévu pour chaque chambre (2, 3) réceptrice deux moyens (2b, 2c ; 3b, 3c) de maintien, disposés en se succédant dans la direction (Z) d'enfichage, et **en ce que** la région d'action de l'élément (20) élastique se situe plus près du moyen (2b, 3b) de maintien frontal, le premier dans la direction (Z) d'enfichage.

2. Dispositif de maintien suivant la revendication 1, **caractérisé en ce que** l'élément (20) élastique produit, en coopération avec des butées sur les parties réceptrices, une orientation des boîtiers (7, 8) de connecteurs parallèlement à l'axe longitudinal.

3. Dispositif de maintien suivant l'une des revendications précédentes, **caractérisé en ce que** l'élément élastique est un ressort (20) de pression.
